# DEMANDE DE BREVET EUROPEEN

(11) **EP 4 167 005 A1**
(43) Date de publication de la demande: **19.04.2023**
(21) Numéro de dépôt: 22201424.3
(22) Date de dépôt: 13.10.2022
(51) Int. Cl.: G02B 6/38

(54) **PROCÉDÉ D'IDENTIFICATION D'UN PORT DE CONNEXION À UNE FIBRE OPTIQUE PARMI PLUSIEURS PORTS DE CONNEXION FORMÉS SUR UN BOÎTIER**

(30) Priorité: 13.10.2021 FR 2110856
(71) Demandeur: IDEA OPTICAL, 22300 Lannion (FR)
(72) Inventeur: MAGNE, Julien, MONTREAL, H4V 2B6 (CA); SEGUIN, François, BAIE-D URFÉ, H9X 3K3 (CA); VERAND, Luis, VAUDREUIL-DORION, J7V 7P9 (CA); ST-HILAIRE, Charles, OKA, J0N 1E0 (CA); LE PROVOST, Franck, 22560 PLEUMEUR-BODOU (FR); PELTIER, Servan, 28300 GASVILLE OISEME (FR)
(74) Mandataire: Regimbeau

(57) **Abrégé**

Procédé d'identification d'un élément d'interconnexion optique parmi plusieurs éléments d'interconnexion optique, comprenant : injecter (100), dans une fibre optique (2) reliée à l'élément d'interconnexion optique à identifier, un signal optique ayant une longueur d'onde prédéfinie de sorte que le signal optique traverse la fibre optique puis ressorte de l'élément d'interconnexion à identifier ; et pendant l'injection, déplacer (102) un dispositif (50) par rapport aux éléments d'interconnexion de sorte que les éléments d'interconnexion soient successivement mis en regard avec un photodétecteur (73) du dispositif qui est sensible à la longueur d'onde prédéfinie, le déplacement étant réalisé jusqu'à ce qu'un indicateur (74) du dispositif indique que le signal optique ayant la longueur d'onde prédéfinie est détecté par le photodétecteur (73).

## Description

### DOMAINE DE L'INVENTION

La présente invention concerne un procédé d'identification d'un port de connexion à une fibre optique parmi plusieurs ports de connexion formés sur un boîtier.

### ETAT DE LA TECHNIQUE

Un réseau FttH (de l'anglais : Fiber to the Home, ce qui signifie « Fibre optique jusqu'au domicile ») est un type de réseau de télécommunications physique qui permet notamment l'accès à internet à très haut débit et dans lequel une fibre optique est reliée au domicile d'un abonné.

Un point de mutualisation (PM) ou point de flexibilité, est, sur un réseau FTTH mutualisable, l'endroit où s'effectue la connexion entre les fibres optiques de différents abonnés (c'est-à-dire des fibres optiques reliées aux domiciles respectifs de ces différents abonnés) et des cordons reliés à des réseaux administrés par différents opérateurs.

A un tel point de mutualisation, on trouve généralement un boîtier de distribution comprenant plusieurs ports de connexion agencés les uns à côté des autres, chaque port de connexion est relié, à l'intérieur du boîtier de distribution, à une fibre optique d'un abonné.

Lorsqu'un utilisateur souscrit à un abonnement d'accès à internet auprès d'un opérateur, il faut que la fibre optique reliée à son domicile soit également reliée au réseau administré par cet opérateur. Pour réaliser cette liaison, un technicien se déplace au point de mutualisation auquel la fibre optique de l'abonné est reliée. Le technicien cherche, parmi les ports de connexions se trouvant sur le boîtier de distribution, quel est le port de connexion qui est relié à la fibre optique reliée au domicile de l'abonné. Une fois ce port de connexion identifié, le technicien connecte à ce port une autre fibre optique, que l'on appelle généralement « cordon », reliée au réseau de l'opérateur.

En d'autres termes, le port de connexion constitue un élément d'interconnexion entre la fibre optique reliée au domicile de l'abonnée, et le cordon relié au réseau de l'opérateur.

Dans un premier cas ou l'abonné est un primo accédant à un réseau FTTH, aucun cordon d'opérateur n'est connecté au port de connexion de l'abonné, avant que le technicien n'intervienne.

Dans un deuxième cas où l'abonné change d'opérateur, un premier cordon relié au réseau de l'ancien opérateur de l'abonné est déjà connecté au port de connexion de l'abonné au moment où le technicien intervient. Le technicien doit alors déconnecter ce premier cordon du port de connexion de l'abonné, avant de connecter à ce même port de connexion un deuxième cordon relié au réseau du nouvel opérateur de l'abonné.

Pour aider le technicien à identifier le port de connexion qui concerne l'abonné parmi les ports présents sur le boîtier de distribution, il a été proposé d'injecter de la lumière visible dans la fibre optique de l'abonné, depuis le domicile de cet abonné. La lumière injectée se propage dans la fibre optique, atteint le port de connexion, et sort du boîtier de distribution via ce port de connexion. Le technicien peut détecter cette lumière sortante à l'œil nu en se plaçant en face de chaque port du boîtier de distribution non occupé par un cordon d'opérateur. Généralement, un port du boîtier non occupé par un cordon d'opérateur est obstrué par un bouchon, mais la lumière injectée peut quand même traverser ce bouchon ; le technicien voit alors une tache de lumière sur ce bouchon.

Cette solution présente toutefois des inconvénients.
- Si le boîtier est très éloigné du domicile de l'abonné, la lumière injectée peut subir une atténuation trop importante au cours de la propagation pour être perçue par le technicien dont l'œil est placé devant le port de connexion.
- Dans le deuxième cas d'intervention (changement d'opérateur), le port de connexion qui concerne l'abonné est bouché par un cordon, ce qui rend quasiment impossible la détection de la lumière injectée à l'œil nu par un technicien placé devant le boîtier. Pour contourner cette difficulté, le technicien pourrait ouvrir le boîtier, et manipuler les fibres optiques afin de tenter de localiser une lumière qui s'échapperait de l'une d'entre elles, mais ces étapes allongent la durée de l'intervention et risquent de perturber la transmission sur les fibres optiques des autres abonnés voire détériorer les fibres optiques manipulées.

### EXPOSE DE L'INVENTION

Un but de l'invention est de faciliter l'identification d'un élément d'interconnexion optique parmi plusieurs éléments d'interconnexion optique.

Il est à cet effet proposé, selon un premier aspect, un procédé d'identification d'un élément d'interconnexion optique parmi plusieurs éléments d'interconnexion optique, le procédé comprenant :
- injecter, dans une fibre optique reliée à l'élément d'interconnexion optique à identifier, un signal optique ayant une longueur d'onde prédéfinie de sorte que le signal optique traverse la fibre optique puis ressorte de l'élément d'interconnexion à identifier,
- pendant l'injection, déplacer un dispositif par rapport aux éléments d'interconnexion de sorte que les éléments d'interconnexion soient successivement mis en regard avec un photodétecteur du dispositif qui est sensible à la longueur d'onde prédéfinie, le déplacement étant réalisé jusqu'à ce qu'un indicateur du dispositif indique que le signal optique ayant la longueur d'onde prédéfinie est détecté par le photodétecteur.

Le procédé selon le premier aspect peut également comprendre les caractéristiques optionnelles suivantes, prises seules ou en combinaison.

Les éléments d'interconnexion optique peuvent comprendre :
- au moins un port formé sur un boîtier, le port étant relié à une fibre optique et capable d'être mis en prise de manière amovible avec une fiche d'un cordon pour interconnecter la fibre optique avec le cordon, le port n'étant toutefois pas en prise avec une fiche lors de l'injection ; et/ou
- une fiche d'un cordon étant en prise de manière amovible avec un port formé sur un boîtier lors de l'injection, le port étant par ailleurs relié à une fibre optique pour interconnecter la fibre optique avec le cordon ; et/ou
- une soudure interconnectant deux fibres optiques.

De préférence, le signal optique est adapté pour traverser le matériau dans lequel la fiche est réalisée, depuis l'intérieur du cordon jusqu'à l'extérieur du cordon. Un avantage procuré par cette caractéristique est qu'il n'y a pas besoin de former de lumière dans la fiche pour permettre la détection du signal optique. Ce matériau peut être l'ABS ou le PBT.

De préférence, le dispositif comprend :
- une partie de préhension présentant une première paroi préhensible par un utilisateur et s'étendant autour d'un premier axe,
- une partie de captation présentant une deuxième paroi s'étendant autour d'un deuxième axe sécant avec le premier axe, une entrée optique pour l'entrée du signal optique à l'intérieur du dispositif vers le photodétecteur étant formée dans la deuxième paroi.

De préférence, le signal optique injecté est modulé, par exemple modulé en amplitude, et le dispositif comprend un démodulateur pour démoduler le signal optique modulé.

De préférence, le dispositif comprend un filtre optique adapté pour laisser passer une bande de longueurs d'ondes incluant la longueur d'onde prédéfinie, et pour atténuer ou éliminer des longueurs d'onde hors de la bande.

De préférence, la longueur d'onde prédéfinie est hors du domaine visible.

De préférence, le signal optique a une longueur d'onde supplémentaire dans le domaine visible.

De préférence, l'indicateur est un indicateur visuel, sonore ou vibratoire.

De préférence, le signal optique est injecté dans la fibre optique depuis le domicile d'un abonné.

Il est également proposé, selon un deuxième aspect, un procédé de raccordement d'une fibre optique reliée au domicile d'un abonné avec un réseau administré par un opérateur, le procédé comprenant :
- identifier, parmi plusieurs éléments d'interconnexion optiques, un élément d'interconnexion optique relié à la première fibre optique par mise en œuvre du procédé selon le premier aspect,
- connexion d'une autre fibre optique à l'élément d'interconnexion identifié, l'autre fibre optique étant par ailleurs reliée au réseau administré par l'opérateur.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 illustre de façon schématique un exemple de réseau FTTH.
La figure 4 est une vue en perspective d'un injecteur selon un mode de réalisation.
La figure 5 illustre de manière schématique des composants internes d'un injecteur selon un mode de réalisation.
La figure 6 est une vue de dessus d'un dispositif récepteur de signal optique, selon un mode de réalisation.
La figure 7 est une vue en perspective de côté du dispositif déjà représenté en figure 6.
La figure 8 illustre de manière schématique des composants internes du dispositif représenté sur les figures 6 et 7.
La figure 9 est un organigramme d'étapes d'un procédé selon un mode de réalisation.
La figure 10 représente une position occupée par le dispositif représenté sur les figures 6 à 8, au cours d'une mise en œuvre du procédé de la figure 9.

Sur l'ensemble des figures, les éléments similaires portent des références identiques.

### DESCRIPTION DETAILLEE DE L'INVENTION

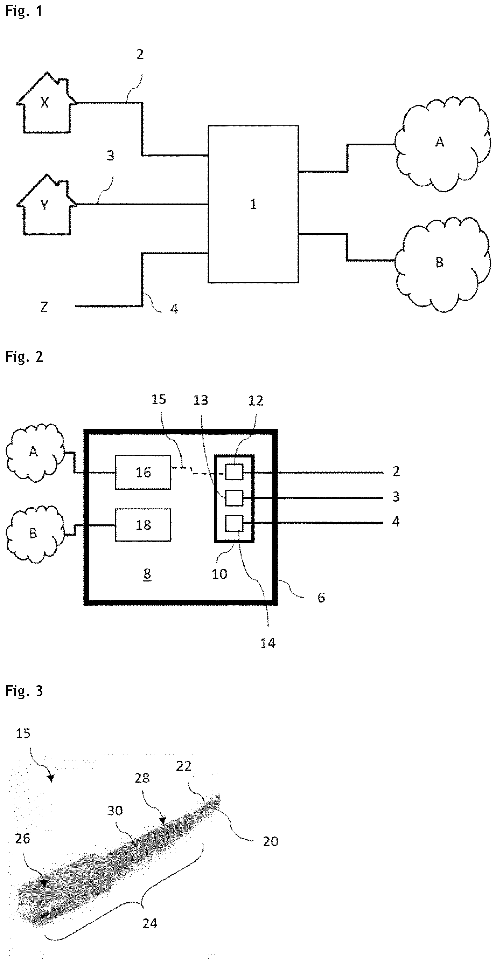

En référence à la **figure 1****,** un réseau optique de type FttH comprend un point de mutualisation 1 et une pluralité de fibres optiques 2, 3, 4.

La fibre optique 2 présente une première extrémité se trouvant au domicile X d'un abonné de référence, et une deuxième extrémité reliée au point de mutualisation, la deuxième extrémité étant opposée à la première extrémité. Par convention, on appelle dans la suite la fibre optique 2 « fibre optique de référence ».

De manière conventionnelle, la fibre optique de référence 2 comprend un cœur et une gaine entourant le cœur. Le cœur est adapté pour servir de milieu de transmission pour un signal optique, depuis la première extrémité jusqu'à la deuxième extrémité opposée, et vice-versa. La fibre optique de référence constitue ainsi un canal de communication entre le point de mutualisation 1 et le domicile X de l'abonné.

La première extrémité de la fibre optique de référence est connectée à un Point de Terminaison Optique (PTO) situé au domicile X.

Chaque autre fibre optique 3, 4 faisant partie de la pluralité de fibres optiques présente les mêmes caractéristiques que la fibre optique de référence 2, à ceci près qu'elles sont reliées à des domiciles respectifs différents Y, Z. Ainsi, chaque fibre optique 2, 3, 4 est associée à un domicile qui lui est propre (et par conséquent associé à un abonné qui lui est propre). Bien que seulement trois fibres optiques 2, 3, 4 sont représentées sur la figure 1 à des fins de clarté, le nombre de fibres optiques reliées au point de mutualisation 1 peut en pratique être supérieur à trois.

Lorsque toutes les fibres optiques reliées au point de mutualisation 1 sont reliées à des domiciles respectifs X, Y, Z se trouvant au sein d'un même immeuble, le point de mutualisation 1 est un point de mutualisation d'immeuble (PMI). Alternativement, le point de mutualisation 1 est un point de mutualisation de zone (PMZ) : dans ce cas, le point de mutualisation se trouve typiquement dans un lieu public, par exemple dans une rue.

En référence à la **figure 2****,** le point de mutualisation 1 comprend une armoire 6 définissant un espace de stockage 8, et comprend une porte (non-illustrée) donnant accès à l'espace de stockage 8.

Le point de mutualisation 1 comprend un boîtier de distribution 10. Le boîtier de distribution 10 est logé dans l'espace de stockage 8.

Une pluralité de ports de connexion 12, 13, 14 est formée sur le boîtier de distribution 10. Les ports de connexion 12, 13, 14 sont agencés sur le boîtier de distribution 10 de sorte à pouvoir être vus par un opérateur ayant ouvert la porte de l'armoire 6. Ils se trouvent par exemple en face de la porte de l'armoire 6.

Les ports de connexion optiques 12, 13, 14 sont par exemple disposés sur le boîtier de distribution 10 en une ou plusieurs rangées. Ainsi, chaque port de connexion optique est voisin d'au moins un autre port de connexion optique dans une rangée. Il est entendu que le nombre de ports de connexion peut en pratique être supérieur à trois.

Chaque fibre optique 2, 3, 4 est reliée à un port de connexion 12, 13, 14 qui lui est propre. Par convention, le port de connexion optique 12 auquel la fibre optique de référence 2 est reliée est appelé dans la suite « port de connexion de référence 12 ». Le boîtier de distribution 10 masque totalement ou partiellement les fibres optiques 2, 3, 4.

Chaque port de connexion optique 12, 13, 14 est apte à être mis en prise de manière amovible avec un cordon optique 15, plus simplement appelé cordon 15 dans la suite. Typiquement, chaque port de connexion comprend une prise adaptée pour être mise en prise avec une fiche située à l'extrémité d'un tel cordon 15.

Chaque port de connexion 12, 13, 14 constitue un élément d'interconnexion optique (un connecteur) entre la fibre optique 2, 3, 4 qui lui est reliée et un cordon 15 mis en prise avec ce port. Autrement dit, le port de connexion est adapté pour transmettre à un tel cordon 15 un signal optique émanant de la fibre optique qui lui est reliée et vice-versa.

En définitive, tout port de connexion optique 12, 13, 14 formé sur le boîtier de distribution 10 peut prendre les états suivants :
- Un état « occupé », lorsque le port de connexion optique est en prise avec un cordon 15.
- Une état « disponible », lorsque le port de connexion n'est pas en prise avec un quelconque cordon 15. Dans cet état disponible, le port de connexion peut néanmoins être obstrué par un bouchon translucide.

Dans l'exemple de la figure 2, le port de connexion de référence 12 est occupé, tandis que les ports de connexion 13 et 14 sont disponibles.

Le point de mutualisation 1 comprend également au moins un équipement optique 16, 18 relié à un réseau administré par un opérateur A, B. Sur la figure 2 sont représentés deux équipements optiques 16, 18 de ce type, respectivement reliés aux réseaux A et B, mais leur nombre pourrait bien entendu être différent.

Ces différents équipements optiques 16, 18 se présentent par exemple sous la forme de boîtiers comprenant chacun une pluralité de port de connexion optique, par exemple du même type que les ports de connexion formés sur le boîtier de distribution discuté plus haut. De la sorte, il est possible d'interconnecter, au moyen d'un cordon 15, l'un des ports de connexion optiques formés sur le boîtier de distribution avec l'un des ports de connexion formés sur l'un de ces équipements optiques A, B.

A titre d'exemple, le cordon 15 représenté en pointillés sur la figure 2 est, d'une part, relié au port de connexion de référence 12, et d'autre part relié à l'équipement optique 16 de l'opérateur A. Ainsi, le cordon 15 constitue ainsi un élément d'interconnexion optique entre le port de connexion de référence 12 et l'équipement optique 16, et il en va de même pour tout autre cordon éventuellement présent dans le point de mutualisation 1.

En définitive, les ports de connexions optiques 12, 13, 14 et les éventuels cordons 15 en prise avec de tels ports de connexion constituent des éléments d'interconnexion optiques de types différents.

On a représenté sur la figure 3 un mode de réalisation du cordon 15. Le cordon 15 comprend une fibre optique 20, la fibre optique 20 comprenant un cœur pour la transmission d'un signal optique et une gaine 22 entourant le cœur.

Le cordon 15 comprend par ailleurs une fiche 24 fixée à une extrémité de la fibre optique 20. La fiche 24 est adaptée pour être mise en prise avec une prise formée par l'un quelconque des ports de connexion optique 12, 13, 14.

La fiche 24 s'étend autour de la gaine 22. La fiche 24 présente une partie de connexion, typiquement de section rectangulaire ou carrée, et une partie de jonction, typiquement de section globalement circulaire. La partie de jonction 28 est plus flexible que la partie de connexion 24 (qui reste relativement rigide). La partie de jonction est généralement pourvue de rainures débouchant dans sa surface externe, ces rainures contribuant à sa flexibilité.

La fiche 24 constitue une zone du cordon 15 ou de légères fuites optiques sont susceptibles de survenir. Ainsi, une faible partie d'un signal optique circulant dans le cœur du cordon 15 peut s'échapper du cordon 15 en traversant le matériau dans lequel la fiche 24 est réalisée radialement vers l'extérieur, en particulier en traversant la partie de jonction 28.

Le matériau dans lequel la fiche 24 est réalisée comprend au moins un des matériaux suivants : acrylonitrile butadiène styrène (ABS), poly(téréphtalate de butylène) (PBT), poly(sulfure de phénylène) (PPSU), élastomère thermoplastique (TPE). Un exemple d'élastomère thermoplastique utilisable est le TPE oléfinique vulcanisé (TPV).

Dans un exemple de réalisation, la fiche 24 comprend une partie formant un connecteur SC constituée de PBT et de fibre de verre, et une partie dite « boot » constituée de TPV.

Dans un autre exemple de réalisation, la fiche 24 comprend une partie formant un connecteur LC constituée de PPSU et de fibre de verre, et une partie dite « boot » constituée de TPE.

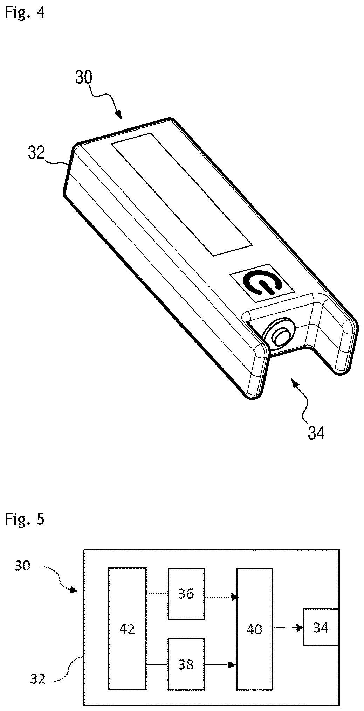

En référence à la **figure 4****,** un injecteur 30 est configuré pour émettre un signal optique apte à se propager dans une fibre optique, en particulier dans la fibre optique de référence 2.

Le signal optique émis par l'injecteur 30 a une longueur d'onde prédéfinie. La longueur d'onde prédéfinie est par exemple hors du domaine visible (c'est-à-dire hors de la gamme allant de 380 nanomètres à 780 nanomètres).

La longueur d'onde prédéfinie est en outre différente des longueurs d'ondes utilisées pour la communication de données (telles que 850, 1300, 1310, 1490 et 1550 nanomètres).

L'injecteur 30 comprend un boîtier 32 définissant une sortie 34 pour permettre au signal optique d'être émis hors du boîtier 32. La sortie du boîtier 32 est configurée pour pouvoir être mise en communication optique avec un point de terminaison optique (PTO), par l'intermédiaire d'un cordon.

L'injecteur 30 comprend au moins une source optique contenue dans le boîtier, telle qu'au moins un laser, pour générer ce signal optique.

De préférence, la source optique inclut un modulateur, de sorte que le signal optique généré soit modulé, par exemple modulé en amplitude.

Dans un mode de réalisation, l'injecteur 30 n'utilise qu'un seul laser pour générer le signal optique, qui ne présente alors qu'une bande de longueur d'ondes étroite comprenant la longueur d'onde prédéfinie.

Dans un autre mode de réalisation illustré en **figure 5****,** le signal optique peut également présenter une longueur d'onde supplémentaire dans le domaine visible, par exemple de couleur rouge. Dans ce cas, l'injecteur 30 comprend un premier laser 36 configuré pour générer un premier signal optique ayant la longueur d'onde prédéfinie, un deuxième laser 38 configuré pour générer un deuxième signal optique ayant la longueur d'onde supplémentaire, et un système optique 40 configuré pour produire un signal optique combinant le premier signal optique et le deuxième signal optique. Un tel système optique comprend par exemple un ou plusieurs miroirs.

L'injecteur 30 est équipé de moyens d'alimentation 42 pour alimenter électriquement le ou chaque laser. Ces moyens d'alimentation comprennent par exemple une batterie, une pile ou bien des moyens de raccordement du dispositif à une prise électrique secteur.

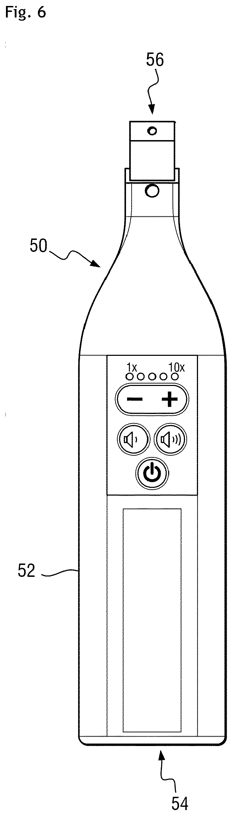

L'injecteur 30 comprend par ailleurs un bouton marche/arrêt pour activer et désactiver ces moyens d'alimentation électrique (visible sur la figure 6).

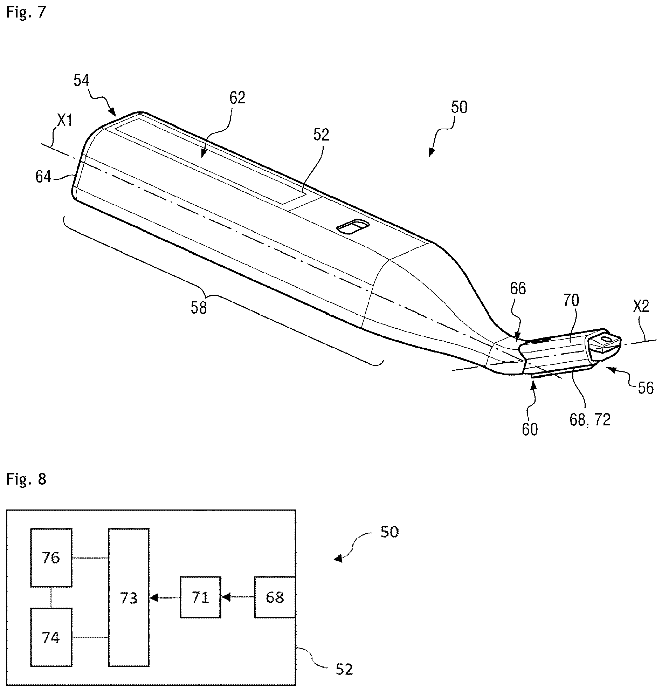

En référence aux **figures 6 à 8****,** un dispositif 50 assurant le rôle de récepteur optique peut être combiné à l'injecteur 30 pour former un kit pour l'identification d'un élément d'interconnexion optique parmi plusieurs éléments d'interconnexion.

Le dispositif 50 comprend un boîtier 52. Le boîtier 52 présente une extrémité proximale 54 et une extrémité distale 56 opposée à l'extrémité proximale 54.

Le boîtier comprend une partie de préhension 58 adapté pour être prise en main par un utilisateur et une partie de captation 60 reliée à la partie de préhension 58.

La partie de préhension 58 est allongée le long d'un premier axe X1, et se termine par l'extrémité proximale du boîtier. La partie de préhension 58 comprend une paroi de préhension 62 s'étendant autour du premier axe X1. La paroi de préhension est annulaire, voire tubulaire. La paroi de préhension 62 présente une surface externe préhensible par la main d'utilisateur. La partie de préhension 58 présente un premier diamètre externe, mesuré perpendiculairement au premier axe.

La partie de préhension comprend en outre une paroi 64 proximale définissant l'extrémité proximale 54 du dispositif 50. La paroi proximale 64 est reliée à la paroi de préhension, et s'étend transversalement au premier axe X1.

La partie de captation 60 du boîtier 52 présente une forme allongée le long d'un deuxième axe X2 qui est sécant avec l'axe X1. La partie de captation est reliée à la partie de préhension par un coude. Par exemple, le deuxième axe X2 est dévié par rapport au premier axe X1 par un angle compris entre 0 et 90 degrés, préférentiellement entre 30 et 70 degrés, par exemple 45 degrés.

La partie de captation 60 se termine par l'extrémité distale 56. La partie de captation 60 comprend une paroi latérale 66 s'étendant autour du deuxième axe X2. La paroi latérale 66 est cylindrique. La paroi latérale 66 présente un deuxième diamètre externe, mesuré perpendiculairement au deuxième axe X2, qui est inférieur au premier diamètre externe de la paroi de préhension 62. La partie de captation 60 constitue ainsi une partie amincie par rapport à la partie de préhension 58.

Le boîtier 52 définit un orifice traversant 68 pour permettre à un signal optique émanant de l'extérieur du boîtier 52 de pénétrer à l'intérieur du boîtier 52. Cet orifice traversant 68 est formé dans la paroi latérale 52. Cet orifice traversant 68 est plus précisément orienté du côté de la paroi latérale 52 qui prolonge l'extérieur du coude reliant la partie de captation 60 à la partie de préhension 58.

Le dispositif 50 comprend en outre un capuchon 70 positionnable dans une position fermée dans laquelle le capuchon 70 bouche l'orifice traversant 68 formé dans le boîtier 52. Dans cette position fermée, un signal optique émanant de l'extérieur du dispositif ne peut pas atteindre l'orifice traversant 68 et ainsi pénétrer à l'intérieur du boîtier 52. Le capuchon 70 est en outre positionnable dans une position ouverte, dans laquelle l'orifice traversant 68 formé dans le boîtier 52 est dévoilé. Dans cette position ouverte, un signal optique émanant de l'extérieur du dispositif 50 peut atteindre l'orifice traversant 68 et ainsi pénétrer à l'intérieur du boîtier 52.

Dans le mode de réalisation illustré, le capuchon 70 forme un embout amovible, pouvant être attaché au boîtier 52 et détaché du boîtier 52. L'embout 70 comprend par exemple un manchon apte à recevoir la partie de captation par translation parallèle au deuxième axe X2. Pour placer l'embout 70 dans sa position ouverte, on peut faire glisser l'embout 70 autour de la partie de captation 60 en le translatant parallèlement au deuxième axe X2, de telle sorte que l'orifice traversant 68 et un autre orifice traversant 72 formé dans l'embout 70 soient superposés. Pour placer l'embout 70 dans sa position fermée, on peut faire glisser l'embout 70 autour de la partie de captation 60 en le translatant parallèlement au deuxième axe X2, de telle sorte que les orifices traversants 68 et 72 ne soient pas superposés.

En définitive, le dispositif 50 est pourvu d'une entrée optique, laquelle est définie par l'orifice traversant 68 seul lorsque le capuchon 70 est détaché, et qui est définie par les orifices 68, 72 alignés lorsque le capuchon est en position ouverte.

Dans un mode de réalisation, la surface externe de la paroi latérale 66 n'est pas de révolution autour du deuxième axe X2 ; le capuchon 70 est alors bloqué en rotation par rapport au boîtier 52 autour du deuxième axe X2. Pour faire passer le capuchon 70 de la position fermée à la position ouverte, on peut détacher le capuchon 70 du boîtier 52 en le faisant translater parallèlement au deuxième axe X2 dans un premier sens, pivoter le capuchon 70 autour du deuxième axe X2, par exemple sur 180 degrés, puis replacer le capuchon 70 autour de la partie de captation 60 par une translation parallèle au deuxième axe X2 dans un deuxième sens opposé au premier sens.

Le fait que le capuchon 70 soit un embout détachable permet de le remplacer par un autre capuchon dont l'orifice traversant 72 est de diamètre différent. Par un tel remplacement, il est possible de modifier le diamètre de l'entrée optique du dispositif 50.

Le dispositif 50 comprend un photodétecteur 73. Le photodétecteur est logé à l'intérieur du boîtier 52, de sorte à être en communication optique avec l'entrée optique 68. De la sorte, un signal optique entrant dans le dispositif 50 via l'entrée optique 68 atteint le photodétecteur 73.

Le photodétecteur 73 est sensible à la longueur d'onde prédéfinie. Il est configuré pour convertir un signal optique reçu en un signal électrique.

De manière générale, le dispositif 50 est capable de détecter et de faire une distinction entre un signal optique qui a la longueur d'onde prédéfinie et un signal optique qui n'a pas la longueur d'onde prédéfinie, ou tout du moins un signal optique dont les longueurs d'ondes sont éloignées de la longueur d'onde prédéfinie.

Pour cela, le dispositif peut comprendre un filtre optique 71 agencé en amont du photodétecteur 73. Le filtre optique 71 est configuré pour laisser passer une bande de longueurs d'ondes incluant la longueur d'onde prédéfinie, et pour atténuer ou éliminer toute longueur d'onde hors de la bande. Ainsi, seules les longueurs d'ondes de la bande, en particulier la longueur d'onde prédéfinie, peuvent ainsi atteindre le photodétecteur. Le filtre optique 71 est typiquement obtenu par superposition de couches minces.

Le dispositif 50 peut également comprendre un démodulateur (non illustré) configuré pour démoduler le signal optique si celui-ci a été modulé côté injecteur.

Le dispositif 50 comprend des moyens de réglage de la sensibilité optique du photodétecteur. En faisant varier cette sensibilité, on fait varier la puissance optique minimale détectable par le photodétecteur. Les moyens de réglage de la sensibilité optique du photodétecteur comprennent par exemple au moins un bouton de réglage formé sur le boîtier 52. Dans le mode de réalisation illustré sur la figure 6, le dispositif 50 comprend deux boutons de réglage de la sensibilité optique du photodétecteur : un bouton + pour augmenter la sensibilité lorsqu'il est pressé, et un bouton - pour réduire la sensibilité lorsqu'il est pressé. En variante, le dispositif 50 pourrait être pourvu d'un élément de réglage mobile par rapport au boîtier 52 dans une gamme de positions (par exemple une molette), chaque position de l'élément de réglage correspondant à une sensibilité optique désirée.

Le dispositif 50 comprend par ailleurs un indicateur 74 configuré pour indiquer l'évènement spécifique suivant : lorsqu'un signal optique ayant la longueur d'onde prédéfinie est détecté par le photodétecteur. L'indicateur 74 est configuré pour indiquer cet évènement à un utilisateur par un signal d'alerte. Tant que l'évènement précité ne survient pas, aucun signal d'alerte n'est émis par l'indicateur 74. Lorsque l'évènement survient, le signal d'alerte est émis.

Dans un mode de réalisation, l'indicateur 74 est un indicateur sonore fournissant à un utilisateur du dispositif un signal d'alerte sonore. Par exemple, l'indicateur est formé par un buzzer. Dans un autre mode de réalisation, l'indicateur 74 est un indicateur visuel générant le signal d'alerte sous une forme visible par l'utilisateur. Par exemple, l'indicateur 74 est formé par une diode électroluminescente ou tout autre type de témoin lumineux. Dans encore un autre mode de réalisation, l'indicateur est un vibrateur configuré pour faire vibrer la partie de préhension 58. Le signal d'alerte est alors une vibration perçue par l'utilisateur lorsque l'utilisateur tient dans sa main la partie de préhension 58.

Bien entendu, les indicateurs de types différentes définis ci-dessus (visuel, sonore, vibratoire) peuvent être combinées au sein du dispositif 50.

Le dispositif 50 comprend également des moyens de réglage d'une intensité du signal d'alerte émis par l'indicateur. Dans le mode de réalisation illustré sur la figure 6, le dispositif comprend deux boutons de réglage d'intensité : un bouton pour augmenter l'intensité du signal d'alerte lorsqu'il est pressé, et un bouton pour réduire l'intensité du signal d'alerte lorsqu'il est pressé. En variante, le dispositif 50 pourrait être pourvu d'un élément de réglage mobile par rapport au boîtier dans une gamme de positions (par exemple une molette), chaque position de l'élément de réglage correspondant à une intensité de signal d'alerte désirée. Dans le cas d'un signal d'alerte sonore, l'intensité correspond au volume sonore du signal d'alerte. Dans le cas d'un signal d'alerte visuel, l'intensité correspond à une intensité lumineuse. Dans le cas d'un signal d'alerte vibratoire, l'intensité correspond à l'amplitude des vibrations.

Les moyens de réglage d'intensité du signal d'alerte, bien qu'avantageux, restent facultatifs. Il peut en effet être prévu qu'un indicateur ne puissent prendre que deux états : un état éteint (pas de signal d'alerte) et un état allumé (émet un signal d'alerte d'intensité fixe). Par exemple, un simple témoin lumineux (LED) d'intensité fixe peut être utilisé comme indicateur visuel.

Le dispositif 50 est équipé de moyens d'alimentation 76 pour alimenter électriquement les différents composants électroniques du dispositif (indicateur, photodétecteur). Ces moyens d'alimentation 76 comprennent par exemple une batterie, une pile ou bien des moyens de raccordement du dispositif à une prise électrique secteur.

Le dispositif 50 comprend par ailleurs un bouton marche/arrêt pour activer et désactiver ces moyens d'alimentation électrique (visible sur la figure 6).

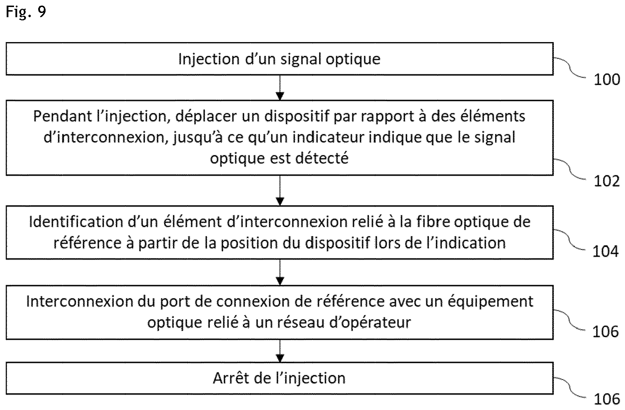

En référence à la **figure 9****,** un procédé de raccordement du domicile X de l'abonné de référence avec le réseau administré par l'opérateur A comprend les étapes suivantes.

Dans une étape préliminaire, la fibre optique de référence 2 a été posée entre le domicile X et le point de mutualisation 1.

Un premier technicien en possession de l'injecteur 30 se déplace au domicile X de l'abonné de référence. Le technicien connecte l'injecteur 30 au point de terminaison optique qui s'y trouve, de sorte à mettre en communication optique la sortie avec la fibre optique de référence. Le technicien presse ensuite sur le bouton marche/arrêt de sorte que le signal optique ayant la longueur d'onde prédéfinie, et le cas échéant la longueur d'onde supplémentaire, soit généré par le ou chaque laser puis émis par l'injecteur 30. Ce signal optique est injecté via la sortie et la PTO dans la fibre optique de référence (étape 100). Le signal optique se propage depuis la première extrémité de la fibre optique de référence 2 jusqu'à sa deuxième extrémité, et traverse le port de connexion de référence 12.

Dans un premier cas, l'abonné de référence est un primo-accédant. Dans ce cas, le domicile X de l'abonné n'est raccordé à aucun réseau administré par un opérateur via la fibre optique de référence au moment de l'étape d'injection 100. Le port de connexion de référence 12 est dans ce cas censé être dans l'état disponible lors de l'injection. Le signal optique traverse alors le port de connexion de référence 12, et le cas échéant un bouchon translucide qui l'obstrue, avant de se propager dans l'espace de stockage 8 de l'armoire 6, entre le boîtier de distribution 10 et la porte de l'armoire 6.

Dans un deuxième cas, l'abonné de référence change d'opérateur (de l'opérateur B vers l'opérateur A). En principe, le domicile X de l'abonné est dans ce cas encore raccordé au réseau administré par l'opérateur B via la fibre optique de référence 2 lors de l'étape d'injection 100. Le signal optique se propage alors dans le cordon 15 occupant le port de connexion de référence 12, ce cordon 15 étant relié à l'équipement optique lui-même relié au réseau de l'opérateur B. Comme indiqué précédemment, la fiche 24 du cordon 15 en prise avec le port de connexion de référence 12 constitue une zone où des fuites de lumière depuis l'intérieur vers l'extérieur du cordon ont lieu. Ainsi, le signal optique, tout du moins une partie de ce signal optique, s'échappe hors du cordon en traversant la fiche, avant de se propager dans l'espace de stockage 8 de l'armoire 6, entre le boîtier de distribution 10 et la porte de l'armoire 6.

Ainsi, dans les deux cas exposés ci-dessus, le signal optique finit par se propager dans l'espace de stockage 8, mais la différence entre les deux cas réside dans l'élément d'interconnexion par lequel le signal optique fuite (port de connexion de référence 12 dans le premier cas, fiche 24 de cordon 15 dans le deuxième cas).

Par ailleurs, un deuxième technicien (pouvant être le premier technicien, ou non) se déplace au niveau du point de mutualisation 1. Le deuxième technicien ouvre la porte de l'armoire 6, de sorte à accéder à l'espace de stockage 8, et pouvoir observer le boîtier de distribution 10.

Comme indiqué précédemment, les ports de connexions optiques 12, 13, 14 formés sur le boîtier de distribution 10 et les éventuelles fiches 24 de cordon 15 en prise avec ces ports de connexion 12, 13, 14 constituent des éléments d'interconnexion optiques.

Dans une étape d'identification, qui est réalisée pendant que l'injection 100 du signal optique a lieu, le deuxième technicien identifie, parmi plusieurs éléments d'interconnexion situés au point de mutualisation 1, un élément d'interconnexion relié au domicile X de l'abonné de référence.

On va dans un premier temps faire l'hypothèse que le deuxième technicien ne sait pas si l'abonné de référence est un primo-accédant ou non, et, plus généralement, ne sait pas si le port de connexion de référence 12 est censé être occupé ou disponible lors de son intervention au point de mutualisation.

Le deuxième technicien a en sa possession le dispositif 50 agissant comme récepteur de signal optique. Le deuxième technicien saisit la partie de préhension 58, allume le dispositif 50 à l'aide de son bouton marche/arrêt. Le deuxième technicien déplace ensuite le dispositif 50 par rapport à des éléments d'interconnexion reliés aux fibres optiques 2, 3, 4, de sorte que différents éléments d'interconnexion soient successivement mis en regard avec le photodétecteur 73 du dispositif 50 (étape 102). Ce déplacement est réalisé jusqu'à ce que l'indicateur 74 du dispositif 50 indique que le signal optique ayant la longueur d'onde prédéfinie est détecté par le photodétecteur 73.

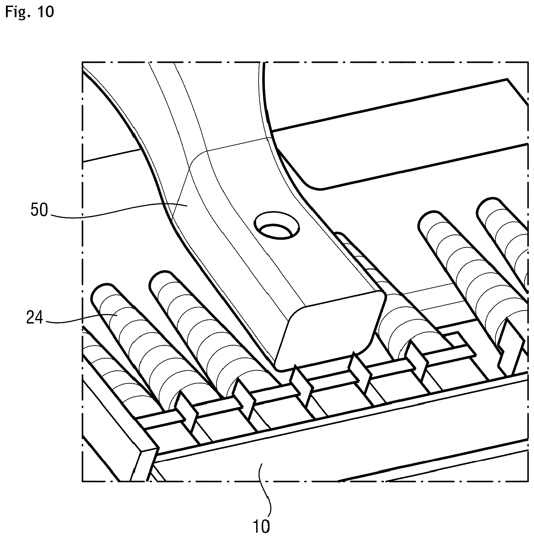

Au cours de ce déplacement, le deuxième technicien fait en sorte que les éléments d'interconnexion suivants soient mis en regard du photodétecteur 73 : des ports de connexion optique disponibles et/ou des fiches de cordons en prise avec des ports de connexion optique (ces ports étant donc occupés). C'est en effet par un de ces éléments d'interconnexion que le signal optique est susceptible de s'échapper. En particulier, la **figure 10** montre une situation dans laquelle le dispositif 50 balaye une rangée de ports comprenant six ports successifs occupés par différentes fiches 24 de cordons 15.

Lorsque l'entrée optique 68, 72 du dispositif 50 se trouve devant un élément d'interconnexion (fiche de cordon occupant un port de connexion, ou port de connexion optique disponible) qui n'est pas relié à la fibre optique de référence 2, cette entrée optique 68, 72 est relativement éloignée du port de connexion de référence 12. En conséquence, le signal optique injecté n'atteint pas l'entrée optique 68, 72 puis le photodétecteur 73, ou tout du moins pas avec une puissance suffisante pour conduire à une détection du signal optique par le photodétecteur 73. A ce stade, l'indicateur 74 n'émet aucun signal d'alerte.

Lorsque l'entrée d'entrée optique 68, 72 du dispositif 50 est positionnée en regard d'un élément d'interconnexion relié à la fibre optique de référence (en regard du port de connexion de référence 12 ou d'une fiche 24 de cordon 15 en prise avec le port de connexion de référence 12), le signal optique pénètre dans le dispositif 50 par l'entrée 68, 72 du dispositif 50, avant d'atteindre le photodétecteur 73 avec une puissance optique suffisante pour conduire à une détection de ce signal optique par le photodétecteur 73. Le signal optique est le cas échéant démodulé. C'est donc à ce moment-là que l'indicateur 74 du dispositif 50 émet le signal d'alerte.

Lorsque le signal optique injecté est modulé par l'injecteur, par exemple en amplitude, le signal optique peut facilement être distingué de bruit solaire. Ainsi, l'incorporation d'un modulateur dans l'injecteur, et l'incorporation conjointe d'un démodulateur correspondant dans le dispositif 50 pour démoduler le signal optique modulé, permet d'améliorer la fiabilité de détection du signal optique à la lumière du jour, notamment en pleine rue.

Dans un premier mode de réalisation de l'étape 102, le deuxième technicien peut balayer de manière exhaustive tous les ports de connexion formés sur le boîtier de distribution 10, à l'aide de la partie de captation 60 du dispositif 50, en procédant par exemple de la manière suivante :
a) Le deuxième technicien identifie à l'œil nu un premier port de connexion, par exemple se trouvant à l'extrémité d'une rangée sur le boîtier de distribution 10, ainsi que son état (occupé ou disponible).
b) le deuxième technicien place le dispositif 50 de sorte que son entrée optique 68, 72 soit en regard d'un premier élément d'interconnexion qui dépend de l'état du premier port de connexion optique. Le premier élément d'interconnexion est :
   o le premier port de connexion optique lui-même, si le premier port de connexion optique est disponible (le technicien peut par exemple mettre le dispositif en contact avec la surface externe du boîtier de distribution et/ou avec le premier port de connexion),
   o la fiche d'un cordon en prise avec le premier port de connexion si le premier port de connexion optique est occupé (le technicien peut par exemple mettre le dispositif en contact avec la surface externe de la fiche).
c) Si une alerte est émise lors de l'étape b), le premier port de connexion optique est identifié comme étant le port de connexion de référence.
d) Si aucune alerte n'est émise par l'indicateur du dispositif lors de l'étape b), le deuxième technicien répète l'étape b) pour un deuxième élément d'interconnexion voisin du premier élément d'interconnexion, le deuxième élément d'interconnexion étant :
   o un deuxième port de connexion optique voisin du premier port de connexion optique dans la même rangée, si le deuxième port de connexion optique est disponible,
   o la fiche d'un cordon en prise avec le deuxième port de connexion si le deuxième port de connexion optique est occupé.

Cette inspection systématique est avantageuse lorsque le signal optique injecté est invisible.

La forme coudée du dispositif 50, résultant du fait que l'axe X2 est sécant avec l'axe X1, le rend particulièrement confortable à utiliser un technicien ayant devant lui une série d'éléments d'interconnexion à balayer.

Par ailleurs, il est à noter que la puissance d'un signal optique qui fuite à travers la fiche 24 d'un cordon 15 est bien inférieure à la puissance d'un signal optique qui fuite par un port de connexion disponible. Ainsi, le deuxième technicien peut le cas échéant se servir des moyens de réglage de sensibilité optique du dispositif, afin de s'adapter à cette différence de puissance.

Des stratégies différentes peuvent être adoptées par le deuxième technicien à l'étape 104.

Dans un deuxième mode de réalisation, dans lequel le signal optique a la longueur d'onde supplémentaire dans le domaine visible (toujours sous l'hypothèse que le deuxième technicien ne sait pas si le port de connexion de référence est censé être occupé ou disponible), le deuxième technicien peut balayer à l'œil nu les ports de connexion disponibles, et balayer à l'aide du dispositif seulement les fiches de cordon en prise avec des ports de connexion occupés.

Dans un troisième mode de réalisation, dans l'hypothèse où le deuxième technicien sait que le port de connexion de référence est censé être occupé, le deuxième technicien peut balayer à l'aide du dispositif seulement les ports de connexion occupés.

Dans un quatrième mode de réalisation, dans l'hypothèse alternative où le deuxième technicien sait que le port de connexion de référence est censé être disponible, le deuxième technicien peut balayer seulement les ports de connexion occupés à l'aide du dispositif, ou bien à l'œil nu (à condition qu'il sache également que le signal injecté est visible).

Dans une étape 104, le deuxième technicien identifie le port de connexion de référence à partir de la position prise par le dispositif lorsqu'il perçoit le signal d'alerte émis par l'indicateur (en particulier, à partir de la position prise par la partie de captation à ce moment-là).

A ce stade, si le port de connexion de référence 12 est occupé par un cordon 15, le deuxième technicien déconnecte la fiche 24 de ce cordon en prise avec le port de connexion de référence.

Dans une étape 106, le technicien établit, à l'aide d'un cordon 15, une liaison optique entre l'équipement optique 16 relié au réseau administré par l'opérateur A et le port de connexion de référence 12. Pour cela, la fiche 24 du cordon 15 est mise en prise par le deuxième technicien avec le port de connexion de référence 12, et le même cordon est mis en prise par le deuxième technicien avec l'équipement optique 16 relié au réseau administré par l'opérateur A.

Ensuite, le deuxième technicien referme l'armoire 6.

L'injection est par ailleurs arrêtée en appuyant sur le bouton marche/arrêt de l'injecteur 30.

Le procédé décrit précédemment, utilisant l'injecteur 30 et le dispositif 50 pour identifier un élément d'un élément d'interconnexion optique parmi plusieurs éléments d'interconnexion optique, peut être utilisé dans d'autres contextes que le raccordement d'un domicile à un réseau d'opérateur, dans d'autres lieux que dans un point de mutualisation, et appliqué à d'autres éléments d'interconnexion que des ports ou des fiches de cordon.

Par exemple, un technicien peut être amené à intervenir dans un lieu où un premier jeu de fibres optiques est relié par soudure à un deuxième jeu de fibres optiques, chaque fibre optique du premier jeu étant reliée à une fibre optique du deuxième jeu qui lui est associée. Une soudure entre deux fibres constitue un élément d'interconnexion où des fuites optiques peuvent se produire au même titre que des ports de connexion optiques ou des fiches de cordon. Le technicien peut être en particulier être amené à devoir identifier l'une ou l'autres des fibres optiques en présence. Pour cela, le technicien peut appliquer le procédé décrit précédemment aux soudures. Conformément à l'étape 100, le signal optique ayant la longueur d'onde prédéfinie est injecté au moyen de l'injecteur 30 dans une fibre optique de référence, de sorte que ce signale se propage dans la fibre optique de référence jusqu'à atteindre la soudure qui interconnecte cette fibre optique de référence avec une autre fibre optique. Conformément à l'étape 102, pendant l'injection 100, le dispositif est déplacé par un technicien de sorte que les soudures soient successivement mises en regard avec le photodétecteur 73 du dispositif 50, jusqu'à ce que l'indicateur 74 du dispositif 50 indique que le signal optique ayant la longueur d'onde prédéfinie est détecté par le photodétecteur 73.

## Revendications

1. Procédé d'identification d'un élément d'interconnexion optique parmi plusieurs éléments d'interconnexion optique, le procédé comprenant :
- injecter (100), dans une fibre optique (2) reliée à l'élément d'interconnexion optique à identifier, un signal optique ayant une longueur d'onde prédéfinie de sorte que le signal optique traverse la fibre optique puis ressorte de l'élément d'interconnexion à identifier,
- pendant l'injection, déplacer (102) un dispositif (50) par rapport aux éléments d'interconnexion de sorte que les éléments d'interconnexion soient successivement mis en regard avec un photodétecteur (73) du dispositif qui est sensible à la longueur d'onde prédéfinie, le déplacement étant réalisé jusqu'à ce qu'un indicateur (74) du dispositif indique que le signal optique ayant la longueur d'onde prédéfinie est détecté par le photodétecteur (73), dans lequel les éléments d'interconnexion comprennent une fiche (24) d'un cordon (15, la fiche (24) étant en prise de manière amovible avec un port (12, 13, 14) formé sur un boîtier (10) lors de l'injection, le port (12, 13, 14) étant par ailleurs relié à la fibre optique (2) pour interconnecter la fibre optique (2) avec le cordon (15).

2. Procédé selon la revendication 1, dans lequel les éléments d'interconnexion optique comprennent au moins un port (12, 13, 14) formé sur un boîtier (10), le port (12, 13, 14) étant relié à une fibre optique (2, 3, 4) et capable d'être mis en prise de manière amovible avec une fiche (24) d'un cordon (15) pour interconnecter la fibre optique (2, 3, 4) avec le cordon (15), le port n'étant toutefois pas en prise avec une fiche lors de l'injection (100).

3. Procédé selon l'une des revendications précédentes, dans lequel le signal optique est adapté pour traverser le matériau dans lequel la fiche est réalisée, depuis l'intérieur du cordon jusqu'à l'extérieur du cordon.

4. Procédé selon la revendication précédente, dans lequel le matériau dans lequel la fiche est réalisée comprend au moins un des matériaux suivants : l'ABS, le PBT, le PPSU, le TPE, le TPV.

5. Procédé selon l'une quelconque des revendications précédentes, dans lequel les éléments d'interconnexion optique comprennent une soudure interconnectant deux fibres optiques.

6. Procédé selon l'une quelconque des revendications précédentes, dans lequel le dispositif (50) comprend :
- une partie de préhension présentant une première paroi (62) préhensible par un utilisateur et s'étendant autour d'un premier axe (X1),
- une partie de captation présentant une deuxième paroi (66) s'étendant autour d'un deuxième axe (X2) sécant avec le premier axe (X1), une entrée optique pour l'entrée du signal optique à l'intérieur du dispositif (50) vers le photodétecteur (73) étant formée dans la deuxième paroi (66).

7. Procédé selon l'une quelconque des revendications précédentes, dans lequel le signal optique injecté est modulé, par exemple modulé en amplitude, et le dispositif comprend un démodulateur pour démoduler le signal optique modulé.

8. Procédé selon l'une quelconque des revendications précédentes, dans lequel le dispositif comprend un filtre optique (71) adapté pour laisser passer une bande de longueurs d'ondes incluant la longueur d'onde prédéfinie, et pour atténuer ou éliminer des longueurs d'onde hors de la bande.

9. Procédé selon l'une quelconque des revendications précédentes, dans lequel la longueur d'onde prédéfinie est hors du domaine visible.

10. Procédé selon la revendication précédente, dans lequel le signal optique a une longueur d'onde supplémentaire dans le domaine visible.

11. Procédé selon l'une quelconque des revendications précédentes, dans lequel l'indicateur est un indicateur visuel, sonore ou vibratoire.

12. Procédé selon l'une quelconque des revendications précédentes, dans lequel le signal optique est injecté dans la fibre optique (2) depuis le domicile (X) d'un abonné.

13. Procédé de raccordement d'une fibre optique reliée au domicile d'un abonné avec un réseau administré par un opérateur, le procédé comprenant :
- identifier, parmi plusieurs éléments d'interconnexion optiques, un élément d'interconnexion optique relié à la première fibre optique par mise en œuvre du procédé selon l'une des revendications précédentes,
- connexion (106) d'une autre fibre optique à l'élément d'interconnexion identifié, l'autre fibre optique étant par ailleurs reliée au réseau administré par l'opérateur.
